**Europäisches Patentamt**

**European Patent Office**

**Office européen des brevets**

(19)

(11) Numéro de publication : **0 059 656**
**B1**

# FASCICULE DE BREVET EUROPÉEN

(12)

(45) Date de publication du fascicule du brevet :
**25.07.84**

(51) Int. Cl.³ : **A 61 C  5/04**

(21) Numéro de dépôt : **82400241.4**

(22) Date de dépôt : **10.02.82**

(54) **Bourre-pâte rotatif pour soins dentaires.**

(30) Priorité : **23.02.81 FR 8103516**

(43) Date de publication de la demande :
**08.09.82 Bulletin 82/36**

(45) Mention de la délivrance du brevet :
**25.07.84 Bulletin 84/30**

(84) Etats contractants désignés :
**AT DE GB IT NL SE**

(56) Documents cités :
**FR-A-  640 883**
**FR-A-  743 112**
**FR-A- 2 366 828**

(73) Titulaire : **Zabiolle, Henri**
**183, Boulevard de Strasbourg**
**F-76600 Le Havre (FR)**

(72) Inventeur : **Zabiolle, Henri**
**183, Boulevard de Strasbourg**
**F-76600 Le Havre (FR)**

(74) Mandataire : **Loyer, Jean Marius Louis et al**
**Cabinet Dupuy & Loyer 14, rue La Fayette**
**F-75009 Paris (FR)**

Jouve, 18, rue St-Denis, 75001 Paris, France

## Description

L'invention concerne un bourre-pâte rotatif pour soins dentaires.

Beaucoup de traitements conservateurs passent par la dévitalisation de la dent concernée ou par le traitement et l'obturation radiculaire de dents déjà mortifiées.

Il existe déjà sur le marché des bourre-pâte rotatifs utilisés par les dentistes pour obturer les « canaux radiculaires » des dents dévitalisées.

L'un de ces appareils connu des brevets FR-A-640 883 et FR-A-743 112 est utilisé déjà depuis une cinquantaine d'années à la satisfaction des praticiens, sous les réserves qu'on précisera ci-après.

Il s'agit d'un petit appareil entraîné mécaniquement dans un mouvement circulaire à des vitesses variables commandées par le tour (ou roulette) du dentiste. Ce bourre-pâte est constitué essentiellement, dans sa partie active, par un élément spiralé jouant le rôle de vis d'archimède. Conique ou non, il est de longueur et de grosseur variables.

Au moment de l'obturation du canal, le bourre-pâte est enrobé d'une pâte obturatrice semi-fluide et y progresse le plus loin qu'il est possible pour faire pénétrer au maximum cette pâte avant qu'elle y durcisse.

L'expérience a prouvé que la progression et le bourrage de la pâte jusqu'au plus profond de la dent, étaient la condition impérative d'un soin de qualité mettant le patient à l'abri de complications pouvant être parfois redoutables. Or, cette même expérience a prouvé qu'il était souvent très difficile de parvenir au plus profond de la dent en raison, soit de l'étroitesse du canal, même dans le cas de conicité de la spirale, soit de la courbure du canal au fur et à mesure que l'on se rapproche de « l'apex », sommet de la dent inclus dans la gencive, soit des aspérités que l'on rencontre dans ledit canal. L'objectif étant, avant l'opération d'introduction de la pâte, de ne pas forer un canal de gros diamètre, ni de forer un faux canal, ce qui d'ailleurs n'est pas le rôle du « bourre-pâte », mais en un mot, de respecter le trajet du canal existant.

Pour reprendre et développer le problème précédemment exposé, on comprend aisément que le traitement conservateur d'une dent dépulpée passe par une obturation canalaire qui se doit d'être absolument parfaite dans la zone apicale de la dent.

Pratiquement, toutes les fois qu'un canal est mal obturé dans sa partie terminale qui est, par parenthèse la plus fine, il se produit des désordres. Quand cet espace n'est pas occupé par la pâte obturatrice, on assiste à la putréfaction des matières organiques non vivantes contenues dans ce récessus inaccessible aux moyens de défense de l'organisme. A noter aussi que c'est aussi au niveau de l'apex que l'on rencontre généralement les courbures les plus importantes.

Cette zone, habitat idéal pour les germes anaérobies, est le point de départ d'une diffusion de toxines dans l'organisme, provoquant les affections les plus diverses.

On peut citer parmi les multiples désordres que peut provoquer une telle dent : des sinusites chroniques d'origine dentaire, des céphalées insupportables et persistantes, des arthroses, des tendinites, des endocardites, des néphrites etc... les dentistes, conscients de ces dangers, savent que l'obturation d'un canal n'est bonne que lorsqu'elle est faite jusque dans la partie terminale de la racine.

Or, plus on se rapproche de cette partie terminale et, plus, en règle générale, les choses deviennent difficiles.

Or, les spirales des bourre-pâte sont faites généralement avec des fils dont la finesse ne va pas au-delà d'une certaine limite pour des raisons évidentes d'ordre mécanique et de rigidité.

A l'épaisseur minimale du fil vient s'ajouter l'épaisseur indispensable à la constitution d'une spirale, si petite soit-elle.

Or, si dans la moyenne des cas, les appareils « bourre-pâte » actuels, donnent satisfaction, les opérations d'obturation ne se présentent pas toujours aussi bien, et il faut souvent, dans bien des cas difficiles, préparer le passage du « bourre-pâte » avant d'entreprendre l'obturation du canal.

Dans certains cas, la conservation d'une dent, futur pilier indispensable à la construction d'un bridge est d'une très grande importance.

Tous les praticiens connaissent par ailleurs, l'inefficacité et le danger que présentent tous les forets rotatifs, même souples, qui se proposent de retrouver le chemin de l'apex avant l'obturation canalaire.

Il est facile d'imaginer pourquoi ces instruments aveugles sont à proscrire (danger de faux canal).

C'est pourquoi l'appareil selon l'invention présente un intérêt considérable, car tout en étant fin, souple et résistant, il recule beaucoup plus loin les limites du possible avec les appareils existants.

En effet, comme on le verra dans la description qui va suivre, il se faufile dans des canaux très fins, il progresse tout en respectant le trajet du canal, en remplissant simultanément un triple rôle : explorer, aléser et obturer le canal, la pâte obturatrice jouant le rôle de lubrifiant, et tout ceci sans qu'il ait été nécessaire, au préalable de se frayer un passage en utilisant un foret dangereux. De plus, lors de l'utilisation de prototypes réalisés par l'inventeur, il a semblé que le bourre-pâte selon l'invention était moins fragile, moins cassant en cours d'opération, l'extrémité lisse et cylindrique munie de son biseau foreur éliminant un élément de « serrage » cause de fracture. L'inventeur a noté aussi qu'en cas de fracture dans la racine, l'extirpation du fragment resté dans la dent paraissait en général plus aisée.

Un « bourre-pâte » rotatif perfectionné conforme à l'invention, comportant de manière connue une première partie spiralée à enveloppe conique effilée, est caractérisé par le fait qu'il comporte une seconde partie prolongeant la première et constituée par une extrémité terminale fine et souple, lisse longitudinalement et absolument rectiligne, l'embout libre de ladite extrémité terminale étant coupé en biseau pour former un outil d'alésage fin.

Selon une particularité de l'invention, l'extrémité rectiligne du « bourre-pâte » constitue 20 à 50 % environ de la longueur de la partie active du « bourre-pâte ».

Selon une autre particularité, le passage de la partie spiralée à la partie rectiligne est progressif.

Selon une variante, le passage de la partie spiralée à la partie rectiligne se fait sans transition.

Selon une autre particularité, l'extrémité terminale rectiligne est cylindrique.

Selon une variante, l'extrémité terminale rectiligne est conique, ou en forme de cône inverse.

Selon une particularité du mode d'utilisation de l'appareil, la partie terminale est suffisamment longue pour que l'on puisse procéder à des coupes successives rénovant le biseau aléseur au fur et à mesure de son usure.

Selon une autre particularité, on peut imaginer qu'à la fabrication, la partie terminale de tous les bourre-pâte sortant d'usine est laissée exagérément longue, d'une manière systématique, donnant ainsi la possibilité au praticien :

— soit de procéder aux coupes successives signalées ci-dessus,

— soit de transformer d'un simple coup de ciseaux ce bourre-pâte perfectionné en bourre-pâte classique, sans qu'il y ait pour autant, avec cette politique, d'incidence notable sur le prix de revient de chaque appareil.

D'autres particularités et avantages apparaîtront à la lecture de la description et des revendications qui suivent, lesquelles sont faites en regard des dessins annexés sur lesquels :

La figure 1 est une vue en coupe d'une dent dont le canal radiculaire a été bien traité.

La figure 2 au contraire, est une vue en coupe d'une dent insuffisamment traitée.

La figure 3 est une vue en coupe montrant l'introduction limitée d'un appareil bourre-pâte rotatif classique de forme spiralée conique.

La figure 4 est une vue analogue montrant l'introduction totale d'un appareil bourre-pâte rotatif conforme à l'invention.

La figure 5 est une vue analogue à la fig. 4 montrant une difficulté particulière de traitement avec un appareil conforme à l'invention.

La figure 6 est une vue en élévation d'un bourre-pâte rotatif classique.

La figure 6a est une vue agrandie de la partie active du bourre-pâte.

La figure 7 est une vue en élévation d'un bourre-pâte rotatif conforme à l'invention.

La figure 7a est une vue agrandie du bourre-pâte de la fig. 7 montrant plus précisément l'extrémité spiralée et sa prolongation rectiligne.

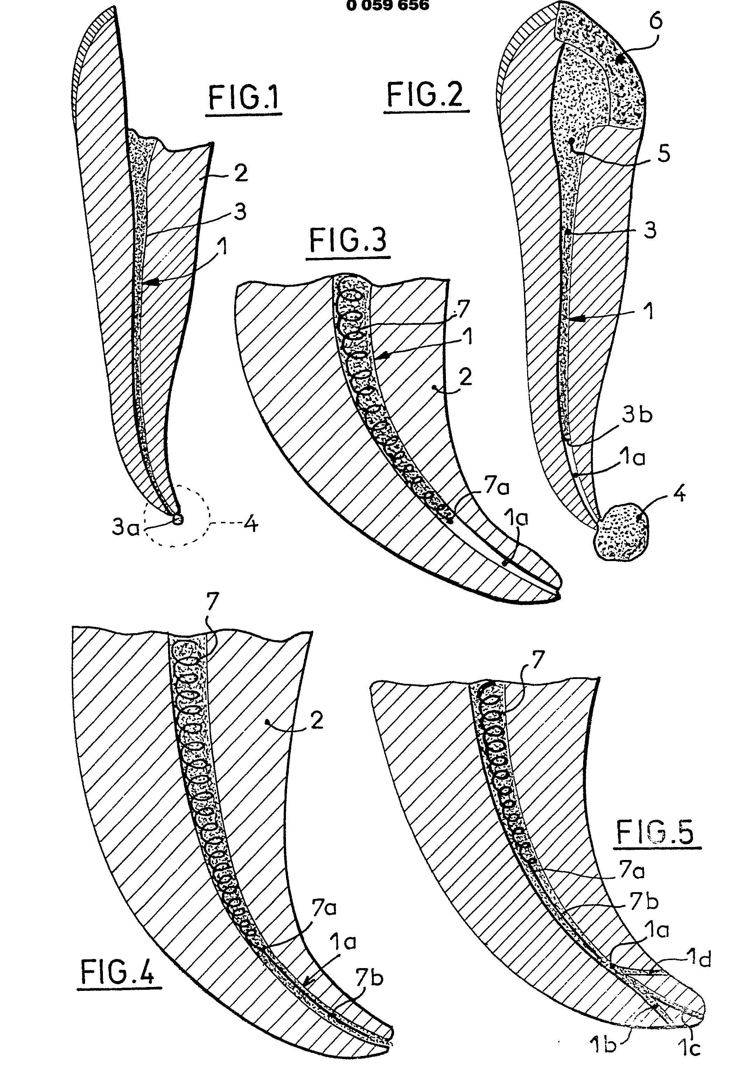

Dans la représentation de la fig. 1, le canal radiculaire 1 de la dent 2 a été bien traité puisque la pâte obturatrice 3 remplit bien le canal jusqu'à son extrémité dans la région de l'apex 4. On voit même que la pâte dépasse en 3a le foramen apical du canal.

Dans la représentation de la fig. 2, la pâte obturatrice s'arrête en 3b, laissant ainsi non obturée une portion non négligeable 1a du canal radiculaire 1, qui devient le siège de phénomènes de putréfaction provoquant, dans la région de l'apex 4, la formation d'un kyste dans l'os. On voit sur cette figure au débouché évasé de la chambre pulpaire 5, l'obturation définitive 6, par exemple un amalgame d'argent.

On comprend très bien, à l'examen de la coupe de la fig. 3, que le bourre-pâte rotatif classique en forme de spirale conique 7 ne puisse aller plus loin dans le canal radiculaire, que la position représentée par l'extrémité 7a, laissant vide de pâte obturatrice la partie 1a du canal, avec toutes les conséquences fâcheuses déjà signalées que cela comporte.

Par contre, on comprend très bien, dans le cas de la fig. 4, que si la partie spiralée et conique du bourre-pâte est prolongée conformément à l'invention par une partie terminale fine, effilée, rectiligne et souple 7b, cette partie terminale, qui s'est faufilée dans le canal 1a, va progresser jusqu'au foramen apical grâce aux mouvements rotatifs et de va-et-vient qu'imprimera à l'appareil le praticien, permettant ainsi, avec des chances de succès considérablement accrues, à la pâte de s'introduire jusqu'au fond du canal sans laisser de parties vides.

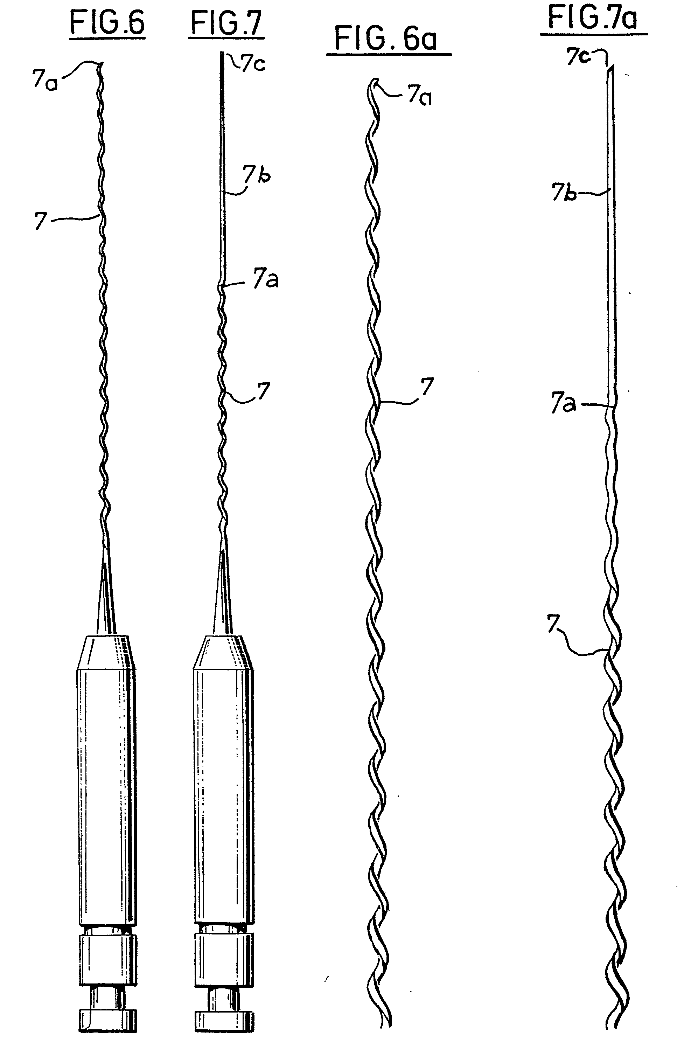

Dans le cas de la fig. 5, on a représenté, un bourre-pâte selon l'invention s'apprêtant à obturer les embranchements très fins d'un apex dit « en delta » avec des chances non négligeables de succès.

En effet, les mouvements rotatifs et de va-et-vient imprimés à l'appareil ont des chances d'introduire successivement l'extrémité terminale 7b dans l'un ou l'autre des embranchements 1b, 1c ou 1d. Statistiquement parlant, il est en effet impossible qu'à chaque poussée l'extrémité du bourre-pâte ne rentre à chaque fois que dans le même embranchement, d'autant plus que le praticien changera à chaque fois et en les diversifiant les inclinaisons de l'instrument au moment des mouvements de va-et-vient.

A l'examen du bourre-pâte rotatif des fig. 6 et 6a, on comprend bien que la progression de l'extrémité de la spirale dans le canal radiculaire est forcément limitée en raison des disproportions de l'enveloppe conique de la pointe par rapport aux dimensions du canal. Et l'on comprend d'autant mieux la progression possible de l'appareil conforme à l'invention, représenté aux fig. 7 et 7a. Mais l'échelle de représentation étant plus grande que celle des figures précédentes, on peut remarquer que l'extrémité de la partie terminale rectiligne est coupée en biseau 7c, ce qui permet au bourre-pâte de jouer, lors de la progression dans le canal, une certaine fonction d'alésage très léger, faisant sauter les aspérités du canal gênant éventuellement ladite progression. Ce sectionnement peut être fait par le praticien, avec des ciseaux, de biais, et renouvelé autant de fois qu'il est nécessaire au fur et à mesure de l'usure constatée du biseau. C'est pourquoi, dans cette intention et pour conserver toujours à la partie terminale une longueur suffisante, elle pourra être d'environ 20 à 50 % de la longueur de la partie spiralée. La fabrication de la partie terminale pourra être obtenue par tous moyens de formage ou d'usinage appropriés, avec passage progressif ou sans transition, de la partie spiralée à la partie rectiligne. De même, cette partie terminale pourra être cylindrique ou légèrement conique d'un bout à l'autre ou vers son extrémité ou même en cône renversé.

C'est le praticien qui, selon le cas, choisit la longueur du fil terminal en coupant lui-même ce fil à l'aide d'une paire de ciseaux dans le biais du fil. Accessoirement, il peut aussi « réaffûter » son instrument et plusieurs fois de suite si cela est nécessaire en cours d'opération ou après passage au stérilisateur en opérant tout simplement une nouvelle coupe aux ciseaux.

L'instrument, ainsi « taillé » est suffisamment agressif pour venir à bout de fortes courbures ou de calcifications pouvant intéresser les parois d'un canal.

Il semble recommandé d'employer le métal qui est utilisé pour les bourre-pâte de bonne qualité, c'est-à-dire un acier inoxydable dur mais flexible et peu cassant.

Les performances du bourre-pâte selon l'invention sont telles que l'on peut conduire les obturations de canaux dans les cas toujours délicats de reprises de traitements.

La méthode est la suivante :

1. Désinfection dans la masse de l'endodonte avec un antiseptique fort.

2. Quelques jours après, cathétérisation du ou des canaux poussée le plus loin possible mais sans acharnement : le foramen apical n'étant pas l'objectif absolu.

3. Et, aussitôt après, obturation du canal avec l'instrument selon l'invention, menée autant que possible au-delà de l'apex en employant une pâte obturatrice ne provoquant pas de réaction après coup.

Cette méthode permet de diminuer notablement le nombre des échecs et fait faire au praticien l'économie de manœuvres harassantes.

En tout cas l'expérience a prouvé que l'instrument venait à bout d'un grand nombre d'obstacles qui seraient restés infranchissables en employant les procédés classiques.

L'instrument donne toute son efficacité quand, rencontrant l'obstacle, on exécute des mouvements de va-et-vient provoquant une succession de percussions en bout d'instrument.

A chaque percussion, il se produit un ensemble de phénomènes dont certains résultant de ce que la zone comprise entre la fin de la spirale et le début de la tige droite constitue une sorte d'articulation qui permet à la tige droite d'« attaquer » les bords du canal sous des angles divers accroissant ainsi les facultés de fouille de son extrémité.

Il se produit donc, en bout d'instrument une véritable turbulence, un tourbillonnement favorable au sein d'une pâte obturatrice que la spirale conique vient condenser à ce niveau.

Tout cela nécessitera parfois une assez grande vitesse de rotation pour obtenir le résultat optimum.

Le franchissement d'une portion difficile de canal ne demandera plus que quelques secondes évitant le travail fastidieux, interminable et produit avec moins d'efficacité par les procédés classiques.

Les ultimes débris organiques se trouvant au niveau de l'obstacle et entraînés au-delà de l'apex, dans l'os maxillaire, sont plus ou moins mélangés à la pâte obturatrice et donc refoulés au-delà de la dent puisque, dans tous les cas il est souhaitable d'opérer un dépassement. A la condition d'utiliser une pâte obturatrice convenable, ces dépassements n'ont jamais posé de problèmes par la suite puisque, comme on le sait, ils sont l'objet, de la part de l'organisme qui les phagocyte, d'un véritable nettoyage.

## Revendications

1. Bourre-pâte rotatif pour soins dentaires, comportant une première partie spiralée (7) à enveloppe cylindrique, conique ou cylindroconique effilée, caractérisé par le fait qu'il comporte une seconde partie (7b) prolongeant la première et constituée par une extrémité terminale fine et souple, lisse longitudinalement et absolument rectiligne, l'embout libre (7c) de ladite extrémité terminale étant coupé en biseau pour former un outil d'alésage fin.

2. Bourre-pâte selon la revendication 1, caractérisé par le fait que l'extrémité rectiligne (7b) du « bourre-pâte » constitue 20 à 50 % environ de la longueur de la partie active du « bourre-pâte ».

3. Bourre-pâte selon la revendication 1, caractérisé par le fait que le passage de la partie spiralée (7) à la partie rectiligne (7b) est progressif.

4. Bourre-pâte selon la revendication 1, caractérisé par le fait que le passage de la partie spiralée (7) à la partie rectiligne (7b) se fait sans transition.

5. Bourre-pâte selon la revendication 1, caractérisé par le fait que l'extrémité terminale rectiligne (7b) est cylindrique.

6. Bourre-pâte selon la revendication 1, caractérisé par le fait que l'extrémité terminale rectiligne (7b) est conique dans un sens ou dans l'autre.

7. Bourre-pâte selon la revendication 1, caractérisé par le fait que la partie terminale est suffisamment longue pour que l'on puisse procéder à ces coupes successives rénovant le biseau aléseur (7c) au fur et à mesure de son usure.

## Claims

1. A rotary paste-carrier for dental treatment comprising a first spiral-shaped portion (7) having a cylindrical, conical or cylindro-conical, tapered envelope, characterized by the fact that it comprises a second portion (7b) which extends from said first portion and is constituted by an absolutely rectilinear, longitudinally smooth, flexible and fine end portion of the paste-carrier, the free end (7c) of said end portion being bevelled so as to form a fine boring tool.

2. A paste-carrier according to claim 1, characterized by the fact that the rectilinear end portion (7b) of said paste-carrier constitutes substantially 20 to 50 % of the length of the active part of the paste-carrier.

3. A paste-carrier according to claim 1, characterized by the fact that said spiral-shaped portion (7) changes to said rectilinear portion (7b) gradually.

4. A paste-carrier according to claim 1, characterized by the fact that said spiral-shaped portion (7) changes to said rectilinear portion (7b) without transition.

5. A paste-carrier according to claim 1, characterized by the fact that the rectilinear end portion (7b) is cylindrical.

6. A paste-carrier according to claim 1, characterized by the fact that the rectilinear end portion (7b) is conical, in one direction or another.

7. A paste-carrier according to claim 1, characterized by the fact that the end portion is sufficiently long to permit effecting therein a number of successive cuts on a bevel so as to form a fine boring tool (7c) whenever the previous bevelled end becomes worn.

**Ansprüche**

1. Drehbare Stopfvorrichtung für Zahnfüllungen für Zahnbehandlungen mit einem ersten spiralförmigen Teil (7) mit zylindrischem, konischem oder konisch zulaufendem Mantel, dadurch gekennzeichnet, dass sie einen zweiten Teil (7b) umfasst, der sich an den ersten Teil anschliesst und aus einem dünnen und biegsamem, in Längsrichtung glattem und absolut geradlinigem Endstück besteht, wobei das freie Ende (7c) des genannten Endstückes schräg abgeschnitten ist, um ein feines Bohrwerkzeug zu bilden.

2. Stopfvorrichtung für Zahnfüllungen nach Anspruch 1, dadurch gekennzeichnet, dass das geradlinige Endstück (7b) der Stopfvorrichtung etwa 20-50 % der Länge des aktiven Teiles der Stopfvorrichtung ausmacht.

3. Stopfvorrichtung für Zahnfüllungen nach Anspruch 1, dadurch gekennzeichnet, dass der Übergang vom spiralförmigen Teil (7) zum geradlinigen Teil (7b) progressiv erfolgt.

4. Stopfvorrichtung für Zahnfüllungen nach Anspruch 1, dadurch gekennzeichnet, dass der geradlinige Teil (7b) sich übergangslos an den spiralförmigen Teil (7) anschliesst.

5. Stopfvorrichtung für Zahnfüllungen nach Anspruch 1, dadurch gekennzeichnet, dass das geradlinige Endstück (7b) einen zylindrischen Querschnitt aufweist.

6. Stopfvorrichtung für Zahnfüllungen nach Anspruch 1, dadurch gekennzeichnet, dass das geradlinige Endstück (7b) in der einen oder anderen Richtung konisch zuläuft.

7. Stopfvorrichtung für Zahnfüllungen nach Anspruch 1, dadurch gekennzeichnet, dass das Endstück hinreichend lang ist, um aufeinanderfolgende Zuschnitte zur Erneuerung der Bohrschräge (7c) nach Massgabe der Abnutzung derselben zu ermöglichen.

FIG.1  FIG.2  FIG.3  FIG.4  FIG.5

0 059 656

FIG.6   FIG.7   FIG.6a   FIG.7a

2